# EUROPÄISCHE PATENTSCHRIFT

(11) **EP 1 808 246 B1**
(45) Veröffentlichungstag und Bekanntmachung des Hinweises auf die Patenterteilung: **17.02.2010**
(21) Anmeldenummer: 06024977.8
(22) Anmeldetag: 02.12.2006
(51) Int. Cl.: B23B 31/02, B23Q 11/10

(54) **Futter für drehantreibbare Werkzeuge**
Chuck for rotary tools
Mandrin pour outils rotatifs

(30) Priorität: 17.01.2006 DE 102006002089
(43) Veröffentlichungstag der Anmeldung: 18.07.2007
(73) Patentinhaber: Bilz Werkzeugfabrik GmbH & Co. KG, 73760 Ostfildern (DE)
(72) Erfinder: Aichele, Wolfgang, 73773 Aichwald (DE); Babel, Gerhard, 73666 Baltmannsweiler (DE)
(74) Vertreter: Kratzsch, Volkhard

(56) Entgegenhaltungen:
- EP-A- 1 561 539
- DE-C1- 4 128 446
- DE-C1- 4 232 790

## Beschreibung

Die Erfindung bezieht sich auf ein Futter für drehantreibbare Werkzeuge, insbesondere Bohrer, Gewindebohrer od. dgl., der im Oberbegriff des Anspruchs 1 genannten Art.

Futter der eingangs genannten Art sind allgemein bekannt. Sie werden z. B. zum Gewindeschneiden auf Fertigungszentren und NC-Maschinen mit geeigneter Gewindeschneideinrichtung eingesetzt. Derartige Futter können auch mit einem Minimallängenausgleich mit axialer Dämpfung ausgestattet sein, der Synchronisationsfehler während des Schneidvorganges sowie etwaige auftretende Axialkräfte beim Umschalten der Maschinenspindel kompensiert. Solche Futter sind prinzipiell auch für eine zentrale Kühlmittelzuführung zum Werkzeug geeignet, nicht jedoch für eine heutzutage gewünschte Minimalmengenschmierung und für solche Einsätze, die durch Überführen der Verriegelungseinrichtung in deren Freigabestellung gelöst und aus der Aufnahme der Futterhülse entnommen werden sollen, ohne dass hierbei Veränderungen, z. B. Demontagen, am System der Minimalmengenschmierung erforderlich sind.

Es ist ein Futter der eingangs genannten Art gemäß Oberbegriff des Anspruchs 1 bekannt (EP-A-1 561 539), das als Einsatz ein hülsenförmiges Teil aufweist, welches einen Axialanschlag mit Zentrierwirkung für das Ende eines in die Futterhülse eingebrachten Werkzeuges bildet. Das Werkzeug ist in der Futterhülse mittels einer Spannzange gespannt und mit seinem Ende axial an dem Einsatz angeschlagen, wobei dieses Ende des Werkzeuges kegelstumpfförmig ausgebildet ist und das zugewandte Ende des Einsatzes dazu passend umgekehrt kegelstumpfförmig ausgebildet ist, so dass beim Anschlagen des Werkzeuges mit seinem Ende an diesem Einsatz die Abdichtung eines dazwischen gebildeten Raumes geschaffen ist, in den mittels eines zentralen, den Einsatz durchsetzenden Rohres in diesem geführtes Kühl-/Schmiermittel eingeleitet wird. Der Einsatz ist innerhalb der Aufnahme der Futterhülse mittels eines Gewindes gehalten und axial verstellbar. Der Einsatz ist nicht der eigentliche Halter des eingebrachten Werkzeuges, das vielmehr mittels einer Spannzange in der Futterhülse gespannt ist, wobei der Einsatz lediglich dem axialen endseitigen Anschlag des eingesteckten Werkzeuges und damit der Begrenzung der Einstecktiefe sowie der Überleitung des Kühl-/Schmiermittels dient.

Der Erfindung liegt die Aufgabe zugrunde, ein Futter der eingangs genannten Art zu schaffen, das insbesondere auch einer Minimalmengenschmierung zugänglich ist bei zugleich funktionierender Verriegelungseinrichtung zum Verriegeln bzw. Lösen eines in die Aufnahme eingesteckten Einsatzes, der ohne Manipulationen an den Elementen der Minimalmengenschmierung leicht entnehmbar ist.

Die Aufgabe ist bei einem Futter für drehantreibbare Werkzeuge der eingangs genannten Art gemäß der Erfindung durch die Merkmale im Anspruch 1 gelöst. Vorteilhafte weitere Erfindungsmerkmale sowie Ausgestaltungen dazu ergeben sich aus den Unteransprüchen. Das erfindungsgemäße Futter ermöglicht eine zuverlässige Minimalmengenschmierung ohne etwaige Gefahr einer Störung dieser, wobei trotz des zentralen Rohres als Bestandteil der Minimalmengenschmierung die Verriegelungseinrichtung zwischen der Verriegelungsstellung und der Freigabestellung unbehindert verstellbar ist und der Einsatz, z.B. in Form einer Schrumpfhülse, nach Lösen der Verriegelungseinrichtung aus der Aufnahme der Futterhülse ohne Beeinträchtigung der darin verbleibenden Bauteile der Minimalmengenschmierung, insbesondere des zentralen Rohres, entnommen werden und ein neuer Einsatz eingesteckt werden kann. Das Wechseln des Einsatzes ist einfach und schnell möglich. Ein in der Aufnahme befindlicher Einsatz kann mittels der Verriegelungseinrichtung ohne Beeinträchtigung der Minimalmengenschmierung und durch diese entriegelt und der Aufnahme entnommen werden. Statt einer Schrumpfhülse als Einsatz können auch anders gestaltete Einsätze verwendet werden. Das Futter hat eine schlanke, kompakte Bauform und ist einfach im Aufbau und betriebssicher. Es gewährleistet eine große Rundlaufgenauigkeit mit sicherer Drehmomentübertragung von der Futterhülse auf ein im Einsatz befindliches Werkzeug. Ein eingangs beschriebener Minimallängenausgleich mit axialer Dämpfung zur Kompensierung von Synchronisationsfehlern und eventuell auftretenden Axialkräften bei der Spindelumschaltung kann bedarfsweise auch bei diesem Futter vorgesehen bzw. beibehalten werden.

Weitere Einzelheiten und Vorteile der Erfindung ergeben sich aus der nachfolgenden Beschreibung.

Der vollständige Wortlaut der Ansprüche ist vorstehend zur Vermeidung unnötiger Wiederholungen nicht wiedergegeben, sondern statt dessen lediglich durch Hinweis auf die Ansprüche darauf Bezug genommen, wodurch jedoch alle diese Anspruchsmerkmale als an dieser Stelle ausdrücklich und erfindungswesentlich offenbart zu gelten haben.

Die Erfindung ist nachfolgend anhand von in den Zeichnungen gezeigten Ausführungsbeispielen näher erläutert. Es zeigen:
- Fig. 1: einen schematischen axialen Längsschnitt eines Futters für drehantreibbare Werkzeuge, bei dem eine innere Verriegelungseinrichtung für eine Schrumpfhülse sich in ihrer Verriegelungsstellung befindet,
- Fig. 2: eine schematische Seitenansicht mit teilweisem Schnitt entlang der Linie II - II in Fig. 1,
- Fig. 3: einen schematischen Schnitt entlang der Linie III - III in Fig.1,
- Fig. 4: eine schematische perspektivische Ansicht eines von einem Rohr zentral durchsetzten, in Verriegelungsstellung dargestellten Riegels der Verriegelungseinrichtung des Futters in Fig. 1,
- Fig. 5: einen schematischen Schnitt entlang der Linie V - V, bei dem sich der Riegel in der Verriegelungsstellung befindet,
- Fig. 6: einen schematischen Schnitt etwa entsprechend demjenigen in Fig. 5, wobei sich der Riegel in der Freigabestellung befindet.

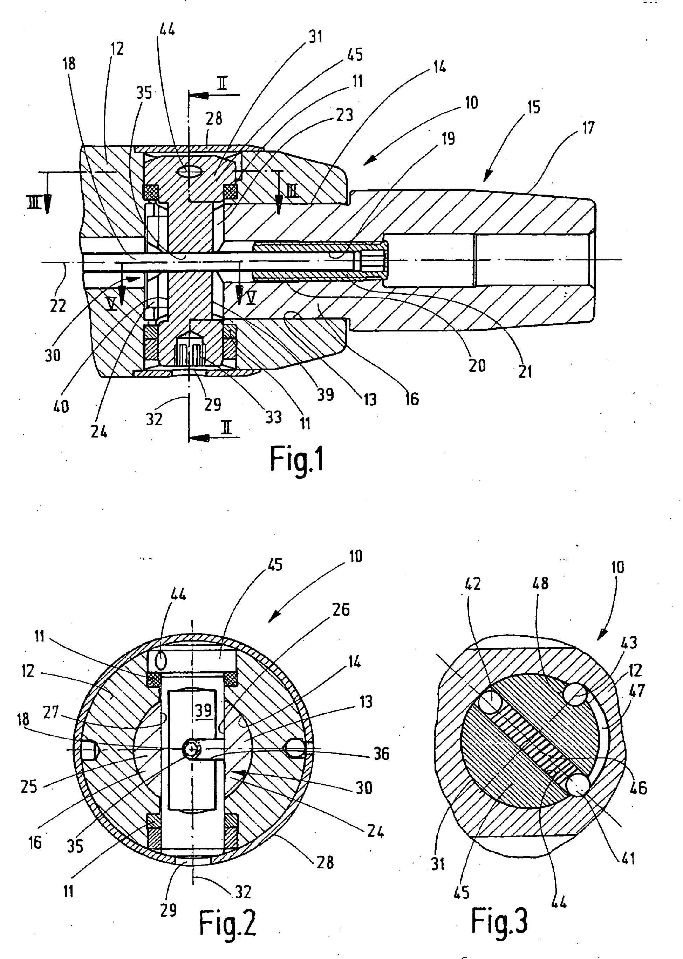

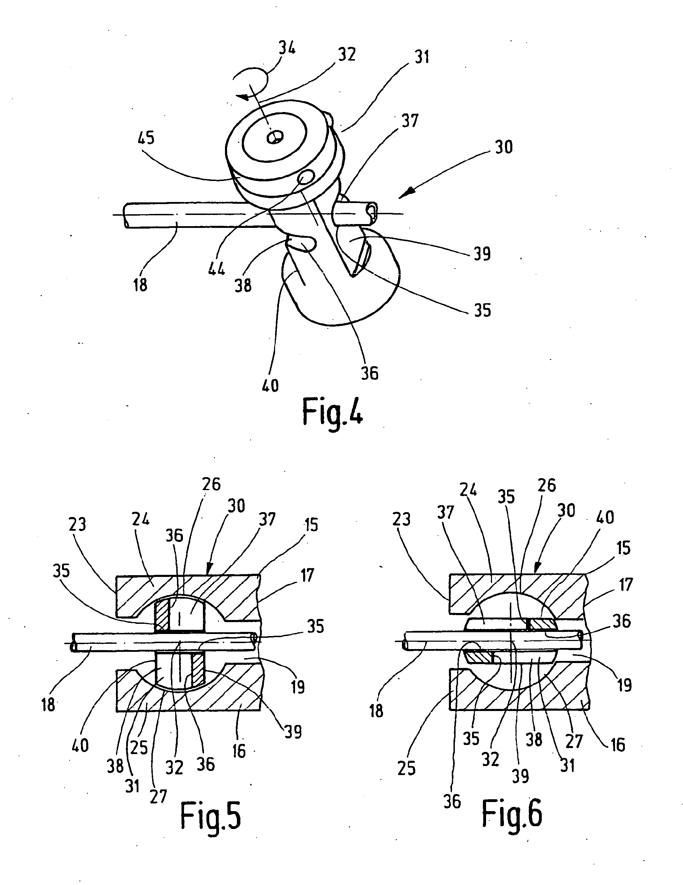

In den Zeichnungen ist ein Futter 10 für drehantreibbare Werkzeuge gezeigt, insbesondere für Bohrer, vor allem für Gewindebohrer. Das Futter 10 ist z. B. mit einem Minimallängenausgleich mit axialer Dämpfung versehen, der etwaige Synchronisationsfehler beim Gewindeformen oder Gewindeschneiden mittels eines nicht gezeigten Gewindebohrers während der spangebenden Bearbeitung sowie etwaige maschinenseitig,z. B. beim Umschalten der Werkzeugmaschinenspindel, auftretende Axialkräfte kompensieren kann. Diese Wirkung ist durch integrierte, verformbare und nur schematisch angedeutete Ringe 11 aus einem Elastomer erreicht. Das Futter 10 weist eine Futterhülse 12 mit zentraler innerer Aufnahme 13 auf, wobei die Futterhülse 12 maschinenseitig aufnehmbar ist, und zwar entweder direkt oder in der Ausbildung als Einsatz, der dann maschinenseitig in einem dort vorhandenen, nicht gezeigten Futter gespannt und gehalten werden kann. Die Aufnahme 13 besteht z. B. aus einer zylindrischen Bohrung 14 am in Fig. 1 vorderen rechten Ende der Futterhülse 12. In die Aufnahme 13 ist ein Einsatz 15 mit einem zylindrischen Einsteckteil 16 einsteckbar. Der Einsatz 15 kann in vorteilhafter Weise aus einer Schrumpfhülse 17 bestehen, die zur thermischen Schrumpfbefestigung eines Werkzeuges darin ausgebildet ist. Eine derartige Schrumpfhülse 17 zur thermischen Schrumpfbefestigung eines Werkzeuges muss zum Werkzeugwechsel erwärmt werden, um eine das Werkzeug freigebende Dehnung zu erzeugen. Um bei dieser Erwärmung die Ringe 11 aus einem Elastomer nicht zu beschädigen, muss die Schrumpfhülse 17 zum Werkzeugwechsel aus der Futterhülse 12 entnehmbar sein. Im eingesteckten Zustand der Schrumpfhülse 17 ist diese mit der Futterhülse 12 mittels einer Verriegelungseinrichtung 30 lösbar verbunden, die sich bei den Darstellungen in Fig. 1, 2, 4 und 5 in einer Verriegelungsstellung befindet, in der die eingesteckte Schrumpfhülse 17 in der Aufnahme 13 der Futterhülse 12 fest verriegelt ist. Die Verriegelungseinrichtung 30 lässt sich aus dieser Verriegelungsstellung in eine in Fig. 6 nur schematisch angedeutete Freigabestellung bewegen, in der die Schrumpfhülse 17 in der Aufnahme 13 gelöst und aus dieser gegensinnig zum Einstecken herausziehbar und entnehmbar ist.

Die Futterhülse 12 und die Schrumpfhülse 17 sind für Minimalmengenschmierung mit zentraler Zuführung von Kühl-/Schmiermittel über ein zentrales Rohr 18 zumindest bis in die Schrumpfhülse 17 hinein ausgebildet. Die Verriegelungseinrichtung 30 ist derart gestaltet, dass die Schrumpfhülse 17 bei in der Futterhülse 12 verbleibendem Rohr 18 in der Aufnahme 13 lösbar und aus dieser entnehmbar ist. Bei dieser Entnahme der Schrumpfhülse 17 verbleibt somit das Rohr 18 innerhalb der Futterhülse 12 in der in Fig. 1 dargestellten Position, wobei das Rohr 18 durch die Verriegelungseinrichtung 30 noch geführt ist, wie später noch erläutert wird. Bei der Minimalmengenschmierung wird ein Aerosol, das aus in Luft fein verteilten Schmierstofftröpfchen besteht, durch einen Kanal, der im Inneren des Rohres 18 gebildet ist und einen konstanten Querschnitt aufweist, hindurch möglichst bis zu den Schneiden eines eingesetzten Werkzeuges geleitet. Das zentral angeordnete Rohr 18 weist über die gesamte Länge des dadurch gebildeten Kühl-/Schmiermittelkanals einen konstanten Querschnitt ohne etwaige Umlenkungen, Abkantungen od. dgl. auf, um zu verhindern, dass sich an derartigen Querschnittsänderungen die feinen Schmierstofftröpfchen absetzen können, wodurch eine zuverlässige Minimalmengenschmierung beeinträchtigt wäre. Diesen Bedingungen ist durch das zentrale geradlinig verlaufende Rohr 18 im Zentrum der Futterhülse 12 und der Aufnahme 13 Rechnung getragen, wobei das Rohr 18 sich bis zur Schrumpfhülse 17 und in dieser durch einen zentralen Durchlass 19 zumindest im Bereich des Einsteckteils 16 erstreckt. Die Schrumpfhülse 17 enthält eine zentrale, mittels eines Gewindes 20 axial einstellbare Einstellhülse 21, die der axialen Einstellung in Anpassung an das in die Schrumpfhülse 17 eingesetzte Werkzeug dient, wobei der zentrale Durchlass 19 für das Rohr 18 in dieser Einsteckhülse 21 enthalten ist.

Die Verriegelungseinrichtung 30 enthält in der Futterhülse 12 einen Riegel 31, der in der Futterhülse 12 zwischen einer Verriegelungsstellung gemäß Fig. 1, 2, 4 und 5 und einer Freigabestellung gemäß Fig. 6 bewegbar ist. Der Riegel 31 dient in seiner Verriegelungsstellung der Verriegelung der in die Aufnahme 13 eingesteckten Schrumpfhülse 17. Die Bewegung des Riegels 31 zwischen dieser Verriegelungsstellung und der Freigabestellung, in der die Schrumpfhülse 17 aus der Aufnahme 13 entnommen werden kann, wird durch den Axialverlauf des Rohres 18, das fester Bestandteil der Futterhülse 12 ist und bleibt, nicht behindert. Der Riegel 31 reicht quer durch die Aufnahme 13 und ist um seine Längsmittelachse 32 zwischen der Verriegelungsstellung und der Freigabestellung drehverstellbar. Hierzu dient eine an einem, in Fig. 1 unten befindlichen Ende des Riegels 31 vorgesehene Werkzeugangriffsfläche, z. B. ein Innensechskant 33, in den ein Werkzeug eingesteckt werden kann, das danach zur Drehverstellung z. B. um zumindest etwa 90° im Uhrzeigersinn gemäß Pfeil 34 in Fig. 4 gedreht werden kann. Der Riegel 31 enthält einen zur Längsmittelachse 22 der Aufnahme 13 koaxialen, zu seiner Längsmittelachse 32 quer gerichteten ersten Durchlass 35 in Form einer Bohrung, durch den sich das Rohr 18 hindurch erstreckt. Der Bohrungsdurchmesser ist zumindest geringfügig größer als der Außendurchmesser des Rohres 18. Ferner enthält der Riegel 31 einen zweiten Durchlass 36 etwa gleichen Durchmessers, der etwa rechtwinklig zum ersten Durchlass 35 gerichtet ist und diesen kreuzt, so dass beide Durchlässe 35, 36 im Zentrum ineinander übergehen. Die Längsmittelachsen beider Durchlässe 35 und 36 verlaufen innerhalb einer gemeinsamen, quer zur Längsmittelachse 32 des Riegels 31 gerichteten Radialebene. Zwei einander diamentral gegenüberliegende, in Fig. 5 und 6 der besseren Übersicht wegen mit 37 und 38 gekennzeichnete, Quadrantenbereiche zwischen den beiden sich kreuzenden Durchlässen sind entfernt, derart, dass eine Drehverstellung des Riegels 31 in Pfeilrichtung 34 um einen Winkel von zumindest etwa 90° relativ zu dem hindurchführenden und feststehenden Rohr 18 möglich ist.

Der Riegel 31 ist aus einem in der Futterhülse 12 um die Längsmittelachse 32 drehbar gelagerten Zylinderbolzen gebildet, der auf zwei einander diametral gegenüberliegenden Umfangsbereichen Abflachungen 39 und 40 aufweist, die zueinander etwa parallel verlaufen und sich parallel zur Längsmittelachse 32 des Riegels 31 erstrecken. Der erste Durchlass 35 mündet beidendig in den Abflachungen 39, 40 und ist mit seiner Mittelachse zu diesen etwa rechtwinklig ausgerichtet.

Die Schrumpfhülse 17 weist am Einsteckteil 16 eine endseitige Gabel 23 auf, die in Fig. 1 nach links hin offen ist und durch zwei zueinander parallele Gabelschenkel 24 und 25 gebildet ist. Beim Einstecken der Schrumpfhülse 17 in die Aufnahme 13 der Futterhülse 12 kann die Gabel 23 mit ihren Gabelschenkeln 24, 25 den sich in Freigabestellung befindlichen Riegel 31 übergreifen und zwischen den Gabelschenkeln 24, 25 aufnehmen. Die Gabel 23 ist mit einer dem Durchmesser des Riegels 31 zumindest im wesentlichen entsprechenden und in Richtung der Längsmittelachse 32 verlaufenden Bohrung dergestalt versehen, dass die Gabeln 24, 25 auf den einander zugewandten Seiten entsprechende, an die Zylinderform des Riegels 31 angepasste Eintiefungen 26 bzw. 27, z. B. konkave Bogenverläufe, aufweisen, in die der Riegel 31 in Form des Zylinderbolzens bei der Drehung um seine Längsmittelachse 32 in seine Verriegelungsstellung (Fig. 5) mit seinen bogenförmigen Umfangsbereichen, die zwischen den Abflachungen 39, 40 verlaufen, zur Verriegelung der Schrumpfhülse 17 formschlüssig hineindrehbar ist.

Der Riegel 31 ist mit in Fig. 3 gezeigten Rastelementen 41, 42 und 43 ausgestattet, die z. B. aus Kugeln bestehen. Zwei Rastelemente 41, 42 sind in einer diametralen Bohrung 44 in einer Kopfscheibe 45 des Riegels 31 enthalten. In der Bohrung 44 befindet sich eine Feder 46, mittels der die Rastelemente 41 und 42 mit einer radial nach außen gerichteten Federkraft beaufschlagt und gegen die Futterhülse 12 angedrückt sind. Die Futterhülse 12 enthält auf der Höhe der Rastelemente 41 bis 43 innenseitig eine über etwa 90° Umfangswinkel sich erstreckende Nut 47, in die die Rastelemente radial eingreifen. Das Rastelement 43 sitzt in einer Vertiefung 48 der Kopfscheibe 45. Die beiden Drehpositionen des Riegels 31, die der Verriegelungsstellung bzw. Freigabestellung entsprechen, werden durch die Rastelemente 41 bis 43 definiert, die in der Nut 47 gleiten und an der jeweiligen, radial gerichteten Endwand der Nut 47 anschlagen. Die Verriegelung des Riegels 31 in der Verriegelungsstellung erfolgt über das Rastelement 43 und das angefederte Rastelement 41 und in der Freigabestellung über das Rastelement 43 und das angefederte Rastelement 42.

Die Futterhülse 12 ist im Bereich des Riegels 31 von einer Hülse 28 umgeben, die im Bereich des Innensechskants 33 mit einer Bohrung 29 für den Durchgriff eines Werkzeuges versehen ist.

In Fig. 1, 2, 4 und 5 ist der Zustand gezeigt, bei dem in die Aufnahme 13 der Futterhülse 12 eine Schrumpfhülse 17 mit ihrem Einsteckteil 16 eingesteckt und mittels der Verriegelungseinrichtung 30, die sich in ihrer Verriegelungsstellung befindet, so verriegelt ist, dass ein sicherer axialer Halt gewährleistet ist. Durch die Passung zwischen der Bohrung 14 und dem Durchmesser des Einsteckteils 16 ist zugleich eine spielfreie, sichere Befestigung in radialer Richtung gewährleistet. Eine zuverlässige Drehmomentübertragung ist auch mittels des zwischen die Gabelschenkel 24, 25 formschlüssig eingreifenden Riegels 31 gewährleistet. Ferner ist eine große Rundlaufgenauigkeit sichergestellt. Die Verriegelung der Schrumpfhülse 17 ist dadurch sichergestellt, dass der Riegel 31 in der Verriegelungsstellung gemäß Fig. 1, 2, 4 und 5 mit den beiden einander diametral gegenüberliegenden, zwischen den Abflachungen 39 und 40 befindlichen Umfangsbereichen formschlüssig aufgenommen ist in den Eintiefungen 26, 27 der Gabelschenkel 24, 25. Die Verriegelungsstellung ist durch die Rastelemente 41 und 43 gesichert, die beide in die Nut 47 eingreifen und dort in jeder Drehrichtung an der zugeordneten Endwand der Nut 47 anschlagen.

Soll die Schrumpfhülse 17 mit darin eingeschrumpftem, nicht gezeigtem Werkzeug in der Aufnahme 13 gelöst werden, so wird der Riegel 31 mittels eines durch die Bohrung 29 in den Innensechskant 33 eingesteckten Werkzeuges in Richtung des Pfeiles 34 um etwa 90°-Umfangswinkel gedreht, d. h. von der in Fig. 5 gezeigten Verriegelungsstellung in die in Fig. 6 gezeigte Freigabestellung. In dieser sind die Eintiefungen 26, 27 der Gabelschenkel 24, 25 außer Eingriff mit den zwischen den Abflachungen 39, 40 verlaufenden bogenförmigen Umfangsbereichen des Riegels 31. Das von Abflachung 39 zu Abflachung 40 gemessene Querschnittsmaß ist kleiner als das Öffnungsmaß der Gabel 23 in Form des Querabstandes der beiden Gabelschenkel 24, 25 voneinander, so dass in dieser Freigabestellung gemäß Fig. 6 die Schrumpfhülse 17 nicht mehr verriegelt ist und somit aus der Aufnahme 13 der Futterhülse 12 herausgezogen werden kann. Bei der Drehbetätigung des Riegels 31 von der Verriegelungsstellung in die Freigabestellung verbleibt das Rohr 18 fest an der Futterhülse 12 und durchsetzt den Riegel 31, und zwar in der Verriegelungsstellung aufgrund des Durchgangs durch den ersten Durchlass 35 und in der demgegenüber um etwa 90° gedrehten Freigabestellung durch den Durchgang durch den zweiten Durchlass 36. Aufgrund der schematisch angedeuteten Schlitze in den beiden Quadrantenbereichen 37 und 38, über die die beiden Durchlässe 35, 36 in Umfangsrichtung miteinander verbunden sind, wird relativ zum feststehenden Rohr 18 diese Drehbetätigung des Riegels 31 zwischen der Verriegelungsstellung und der Freigabestellung möglich, ohne dass dabei das in der Futterhülse 12 verbleibende Rohr 18 störend im Wege ist. Die Gestaltung macht es somit möglich, ein für optimale Minimalmengenschmierung erforderliches geradliniges Rohr 18 im Zentrum der Futterhülse 12 und der Schrumpfhülse 17 zu platzieren und gleichwohl eine Verriegelung und Entriegelung der eingesteckten Schrumpfhülse 17 vorzunehmen, ohne dass dabei das Rohr 18 störend im Wege ist. Zugleich ist nach Entriegeln der Schrumpfhülse 17 auch ein Herausziehen dieser aus der Aufnahme 13 schnell und einfach bei nach wie vor verbleibendem Rohr 18 möglich. Das Futter 10 ermöglicht somit ein einfaches und schnelles Wechseln des Einsatzes 15, insbesondere in Form der Schrumpfhülse 17, ohne dass dabei das Rohr 18 entfernt werden müsste oder in sonstiger Weise störend im Wege ist. Bei allem ergibt sich für das Futter 10 eine schlanke, kompakte Bauform. Dabei versteht es sich, dass als Einsatz 15 statt der Schrumpfhülse 17 auch andere schnelladaptierbare Einsätze verwendet werden können. Ebenso versteht es sich, dass die Futterhülse 12 als maschinenseitig in einem dort vorhandenen Futter aufnehmbarer Einsatz ausgebildet sein kann oder statt dessen direkt maschinenseitig aufnehmbar ist.

## Patentansprüche

1. Futter für drehantreibbare Werkzeuge, insbesondere Bohrer, Gewindebohrer od. dgl., mit einer maschinenseitig aufnehmbaren Futterhülse (12), die eine zentrale innere Aufnahme (13) für einen in die Aufnahme (13) einsteckbaren Einsatz (15) enthält, der z. B. als Schrumpfhülse (17) zur thermischen Schrumpfbefestigung eines Werkzeuges darin ausgebildet ist und der im eingesteckten Zustand mit der Futterhülse (12) mittels einer Verriegelungseinrichtung (30) lösbar verbindbar ist, wobei die Futterhülse (12) und der Einsatz (15), insbesondere die Schrumpfhülse (17), für Minimalmengenschmierung mit zentraler Zuführung von Kühl-/Schmiermittel über ein zentrales Rohr (18) zumindest bis in den Einsatz (15) hinein ausgebildet sind und die Verriegelungseinrichtung (30) derart gestaltet ist, dass der Einsatz (15) bei in der Futterhülse (12) verbleibendem Rohr (18) in der Aufnahme (13) lösbar und daraus entnehmbar ist,
**dadurch gekennzeichnet,**
**dass** die Verriegelungseinrichtung (30) in der Futterhülse (12) einen quer durch die Aufnahme (13) reichenden und um seine Längsmittelachse (32) zwischen einer Verriegelungsstellung und einer Freigabestellung um etwa 90° Umfangswinkel drehverstellbaren Riegel (31) für eine Verriegelung des in die Aufnahme (13) eingesteckten Einsatzes (15) enthält und dass die Bewegung des Riegels (31) zwischen der Verriegelungsstellung und Freigabestellung nicht durch den Axialverlauf des Rohres behindert ist.

2. Futter nach Anspruch 1,
**dadurch gekennzeichnet,**
**dass** der Einsatz (15) einen zentralen Durchlass (19) für das Rohr (18) enthält.

3. Futter nach Anspruch 2,
**dadurch gekennzeichnet,**
**dass** der Einsatz (15) eine zentrale, mittels eines Gewindes (20) axial einstellbare Einstellhülse (21) enthält und dass der zentrale Durchlass (19) für das Rohr (18) in der Einstellhülse (21) enthalten ist.

4. Futter nach Anspruch 1,
**dadurch gekennzeichnet,**
**dass** der Riegel (31) einen zur Längsmittelachse (22) der Aufnahme (13) koaxialen, quer zu seiner Längsmittelachse (32) gerichteten Durchlass (35) enthält, durch den sich das Rohr (18) hindurcherstreckt.

5. Futter nach Anspruch 4,
**dadurch gekennzeichnet,**
**dass** der Riegel (31) einen zweiten Durchlass (36) enthält, der etwa rechtwinklig zum ersten Durchlass (35) gerichtet ist und diesen kreuzt, und
**dass** zwei einander etwa diametral gegenüberliegende Quadrantenbereiche (37, 38) zwischen den beiden sich kreuzenden Durchlässen (35, 36) entfernt sind, derart, dass eine Drehverstellung des Riegels (31) um den Winkel von etwa 90° relativ zu dem hindurchführenden Rohr (18) möglich ist.

6. Futter nach einem der Ansprüche 1 bis 5,
**dadurch gekennzeichnet,**
**dass** der Riegel (31) mittels Rastelementen (41, 42, 43), z. B. Rastkugeln, bei der Drehverstellung in der Verriegelungsstellung sowie in der Freigabestellung verrastbar ist.

7. Futter nach einem der Ansprüche 1 bis 6,
**dadurch gekennzeichnet,**
**dass** der Riegel (31) aus einem in der Futterhülse (12) drehbar gelagerten Zylinderbolzen gebildet ist.

8. Futter nach einem der Ansprüche 1 bis 7,
**dadurch gekennzeichnet,**
**dass** der Riegel (31), insbesondere Zylinderbolzen, auf zwei einander diametral gegenüberliegenden Umfangsbereichen Abflachungen (39, 40) aufweist, die zur Längsmittelachse (32) und zueinander etwa parallel verlaufen.

9. Futter nach einem der Ansprüche 4 bis 8,
**dadurch gekennzeichnet,**
**dass** die beiden zueinander etwa rechtwinkligen Durchlässe (35, 36) im Riegel (31) als Bohrungen ausgebildet sind.

10. Futter nach Anspruch 8 oder 9,
**dadurch gekennzeichnet,**
**dass** ein Durchlass (35), insbesondere eine Bohrung, im Riegel (31) mit seiner Mittelachse etwa rechtwinklig zu den beiden Abflachungen (39, 40) ausgerichtet ist.

11. Futter nach einem der Ansprüche 1 bis10,
**dadurch gekennzeichnet,**
**dass** der Einsatz (15) an seinem Einsteckende (16) eine Gabel (23) aufweist, die beim Einstecken des Einsatzes (15) in die Aufnahme (13) der Futterhülse (12) den Riegel (31), wenn sich dieser in seiner Freigabestellung befindet, übergreifen und zwischen ihren Gabelschenkeln (24, 25) aufnehmen kann.

12. Futter nach Anspruch 11,
**dadurch gekennzeichnet,**
**dass** die Gabel (23) auf den einander zugewandten Seiten der Gabelschenkel (24, 25) an den als Zylinderbolzen ausgebildeten Riegel (31) angepasste Eintiefungen (26, 27), z. B. konkave Bogenverläufe, aufweist, in die der als Zylinderbolzen ausgebildete Riegel (31) bei Drehung in seine Verriegelungsstellung mit seinen zwischen den Abflachungen (39, 40) verlaufenden bogenförmigen Umfangsbereichen zur Verriegelung des Einsatzes (15) formschlüssig hineindrehbar ist.

## Claims

1. Chuck for rotary tools, in particular drills, taps or the like, having a chuck sleeve (12) which can be accommodated on the machine side and contains a central inner receptacle (13) for an insert (15) which can be pushed into the receptacle (13) and which is designed, for example, as a shrink-fit sleeve (17) for the thermal shrink-fit fastening of a tool therein and can be detachably connected to the chuck sleeve (12) in the pushed-in state by means of a locking device (30), wherein the chuck sleeve (12) and the insert (15), in particular the shrink-fit sleeve (17), are designed for minimum-quantity lubrication with central feeding of coolant/lubricant via a central tube (18) at least right into the insert (15), and the locking device (30) is designed in such a way that the insert (15) can be detached in the receptacle (13) and removed therefrom with the tube (18) remaining in the chuck sleeve (12), **characterized in that** the locking device (30) in the chuck sleeve (12) contains a lock bolt (31) which extends transversely through the receptacle (13), is rotationally adjustable about its longitudinal centre axis (32) between a locking position and a release position by a circumferential angle of about 90° and is intended for locking the insert (15) pushed into the receptacle (13), and **in that** the movement of the lock bolt (31) between the locking position and the release position is not hindered by the axial course of the tube.

2. Chuck according to Claim 1, **characterized in that** the insert (15) contains a central passage (19) for the tube (18).

3. Chuck according to Claim 2, **characterized in that** the insert (15) contains a central setting sleeve (21) which can be axially set by means of a thread (20), and **in that** the central passage (19) for the tube (18) is contained in the setting sleeve (21).

4. Chuck according to Claim 1, **characterized in that** the lock bolt (31) contains a passage (35) which is coaxial to the longitudinal centre axis (22) of the receptacle (13) and is directed transversely to its longitudinal centre axis (32) and through which the tube (18) extends.

5. Chuck according to Claim 4, **characterized in that** the lock bolt (31) contains a second passage (36) which is directed approximately at right angles to the first passage (35) and crosses the latter, and **in that** two quadrant regions (37, 38) approximately diametrically opposite one another between the two crossing passages (35, 36) are removed in such a way that a rotary adjustment of the lock bolt (31) by the angle of approximately 90° relative to the tube (18) leading through is possible.

6. Chuck according to one of Claims 1 to 5, **characterized in that** the lock bolt (31) can be latched in the locking position and in the release position by means of latching elements (41, 42, 43), e.g. latching balls, during the rotary adjustment.

7. Chuck according to one of Claims 1 to 6, **characterized in that** the lock bolt (31) is formed from a cylindrical pin rotatably mounted in the chuck sleeve (12).

8. Chuck according to one of Claims 1 to 7, **characterized in that** the lock bolt (31), in particular a cylindrical pin, has flats (39, 40) on two circumferential regions diametrically opposite one another, said flats (39, 40) running approximately parallel to the longitudinal centre axis (32) and to one another.

9. Chuck according to one of Claims 4 to 8, **characterized in that** the two passages (35, 36) approximately at right angles to one another in the lock bolt (31) are designed as bores.

10. Chuck according to Claim 8 or 9, **characterized in that** a passage (35), in particular a bore, in the lock bolt (31) is oriented with its centre axis approximately at right angles to the two flats (39, 40).

11. Chuck according to one of Claims 1 to 10, **characterized in that** the insert (15) has at its push-in end (16) a fork (23) which, when the insert (15) is pushed into the receptacle (13) of the chuck sleeve (12), can overlap the lock bolt (31) and accommodate it between its fork legs (24, 25) when said lock bolt (31) is in its release position.

12. Chuck according to Claim 11, **characterized in that** the fork (23), on those sides of the fork legs (24, 25) which face one another, has cavities (26, 27), e.g. concave arc profiles, which are adapted to the lock bolt (31) designed as a cylindrical pin and into which the lock bolt (31) designed as a cylindrical pin, during rotation into its locking position, can be rotated in a positive-locking manner with its curved circumferential regions, running between the flats (39, 40), for locking the insert (15).

## Revendications

1. Mandrin pour outils rotatifs, en particulier forets, forets filetés ou similaires, avec une douille de mandrin (12) pouvant être logée du côté de la machine, qui contient un logement interne central (13) pour un insert (15) pouvant être inséré dans le logement (13), qui est réalisé par exemple sous forme de douille à ajustement fretté (17) pour la fixation par frettage thermique d'un outil dans celle-ci, et qui peut être connecté de manière desserrable dans l'état inséré à la douille de mandrin (12) au moyen d'un dispositif de verrouillage (30), la douille de mandrin (12) et l'insert (15), en particulier la douille à ajustement fretté (17) étant réalisés pour une quantité de lubrification minimale avec une alimentation centrale de lubrifiant/réfrigérant par le biais d'un tube central (18) au moins jusque dans l'insert (15), et le dispositif de verrouillage (30) étant configuré de telle sorte que l'insert (15) dans le logement (13) puisse être desserré et ressorti de celui-ci tandis que le tube (18) reste dans la douille de mandrin (12),
**caractérisé en ce que**
le dispositif de verrouillage (30) dans la douille de mandrin (12) contient un verrou (31) s'étendant transversalement à travers le logement (13) et pouvant être réglé en rotation autour de son axe médian longitudinal (32) d'environ 90° d'angle périphérique entre une position de verrouillage et une position de libération, pour un verrouillage de l'insert (15) inséré dans le logement (13), et **en ce que** le déplacement du verrou (31) entre la position de verrouillage et la position de libération n'est pas gêné par l'étendue axiale du tube.

2. Mandrin selon la revendication 1,
**caractérisé en ce que**
l'insert (15) contient un passage central (19) pour le tube (18).

3. Mandrin selon la revendication 2,
**caractérisé en ce que**
l'insert (15) contient une douille d'ajustage centrale (21) réglable axialement au moyen d'un filetage (20), et **en ce que** le passage central (19) pour le tube (18) est contenu dans la douille d'ajustage (21).

4. Mandrin selon la revendication 1,
**caractérisé en ce que**
le verrou (31) contient un passage (35) coaxial à l'axe médian longitudinal (22) du logement (13), orienté transversalement à son axe médian longitudinal (32), à travers lequel s'étend le tube (18).

5. Mandrin selon la revendication 4,
**caractérisé en ce que**
le verrou (31) contient un deuxième passage (36), qui est orienté approximativement à angle droit par rapport au premier passage (35) et qui le croise, et **en ce que** deux régions de quadrants diamétralement opposées (37, 38) sont espacées entre les deux passages qui se croisent (35, 36), de telle sorte qu'un réglage en rotation du verrou (31) autour de l'angle d'environ 90° par rapport au tube le traversant (18) soit possible.

6. Mandrin selon l'une quelconque des revendications 1 à 5,
**caractérisé en ce que**
le verrou (31) peut être encliqueté au moyen d'éléments d'encliquetage (41, 42, 43), par exemple des billes d'encliquetage, lors du réglage en rotation dans la position de verrouillage ainsi que dans la position de libération.

7. Mandrin selon l'une quelconque des revendications 1 à 6,
**caractérisé en ce que**
le verrou (31) est formé d'un boulon cylindrique monté à rotation dans la douille de mandrin (12).

8. Mandrin selon l'une quelconque des revendications 1 à 7,
**caractérisé en ce que**
le verrou (31), en particulier le boulon cylindrique, présente sur deux régions périphériques diamétralement opposées des méplats (39, 40) qui s'étendent approximativement parallèlement à l'axe médian longitudinal (32) et les uns aux autres.

9. Mandrin selon l'une quelconque des revendications 4 à 8,
**caractérisé en ce que**
les deux passages (35, 36) approximativement à angle droit l'un par rapport à l'autre dans le verrou (31) sont réalisés sous forme d'alésages.

10. Mandrin selon la revendication 8 ou 9,
**caractérisé en ce**
**qu'**un passage (35), notamment un alésage, est orienté dans le verrou (31) avec son axe médian approximativement à angle droit par rapport aux deux méplats (39, 40).

11. Mandrin selon l'une quelconque des revendications 1 à 10,
**caractérisé en ce que**
l'insert (15) présente à son extrémité d'insertion (16) une fourche (23), qui, lors de l'insertion de l'insert (15) dans le logement (13) de la douille de mandrin (12), peut venir en prise par le dessus avec le verrou (31), lorsque celui-ci se trouve dans sa position de libération, et le recevoir entre ses branches de fourche (24, 25).

12. Mandrin selon la revendication 11,
**caractérisé en ce que**
la fourche (23) présente, sur les côtés opposés des branches de fourche (24, 25), des renfoncements (26, 27) adaptés au verrou (31) réalisé sous forme de boulon cylindrique, par exemple des courbes concaves, dans lesquelles le verrou (31) réalisé sous forme de boulon cylindrique peut être vissé par engagement par coopération de forme lors de la rotation dans sa position de verrouillage avec ses régions périphériques de forme courbe s'étendant entre les méplats (39, 40), pour le verrouillage de l'insert (15).
